# EUROPEAN PATENT SPECIFICATION

(11) **EP 1 596 553 B1**
(45) Date of publication and mention of the grant of the patent: **27.07.2016**
(21) Application number: 04291205.5
(22) Date of filing: 11.05.2004
(51) Int. Cl.: H04L 29/06

(54) **Method of providing resources with restricted access**
Verfahren zur Bereitstellung von Betriebsmitteln mit Zugriffsbeschränkung
Méthode permettant l'accès restreint à des ressources

(43) Date of publication of application: 16.11.2005
(73) Proprietor: ALCATEL LUCENT, 92100 Boulogne-Billancourt (FR)
(72) Inventor: Wieslawa, Wajda, Dipl.-Ing., 75210 Keltern (DE)
(74) Representative: Wetzel, Emmanuelle

(56) References cited:
- WO-A-03/021464
- D.E. COMER: "Internetworking with TCP/IP, principles, protocols and architectures, 4th edition." 2000, PRENTICE HALL , US , XP002318883 Chapter 23. * paragraphs [23.9], [23.10], [23.12] *

## Description

The present invention relates to an access server and a method for providing within an IP network resources with restricted access.

To maintain safety and privacy of information is of growing importance within today's telecommunication networks. Concepts as virtual private networks, authentication authorization services and tunneling protocols are developed to ensure safety and privacy of information.

For example, WO 03/060718 describes a system based on an application server, an authentication authorization server and an internet browser. A certificate and authentication session cookie can be stored on the client machine. Client, application server, and authentication authorization server form an interacting computer network. A database stores information specific to the applications. Components of the authentication authorization server encapsulates services available to applications and application servers. Two types of services are available: authorization services and user data services. Authorization services may be used by an application to query for authorization rights for a specific user regarding a specific resource. User data services may be used by an application to query for information about a user. An authentication module maintains data pertinent to the user's registration with the system. Account manager allows users to manage their permits. Thereby, it becomes possible to delegate permissions to access an application to a second user. Upon authenticating of the second user, the second use is provided with access to the application.

But, such approaches base on a static release of an application server within the internet and a static configuration of the domain name servers and the routing tables. Further, such methods restrict the access to the application servers by means of protection mechanisms executed by the application servers themselves. This complicates a dynamic temporary resource deployment in the internet.

It is the object of the present invention to provide dynamically internet resources with restricted access.

The invention is as defined in claims 1 and 9.

The invention enables easy and secure temporary resource deployment within an IP network. It increases security, confidence and privacy in public IP networks. It is not longer necessary to execute and update specific security applications on a local application server to restrict access to the resources of the application server. Further, it becomes possible to apply dynamic IP address allocation schemes on application servers. Since a new IP address is assigned to the application server each time an access is granted by means of the access server, it is not possible for third parties to contact the application and try to overcome the local security mechanisms. Further, the access server triggers the connection of the application server with the IP network. Therefore, it is impossible for a third party to contact the application server via the IP network without the permission of the access server since the application server is only connected with the IP network if this is requested by the access server. Consequently, the invention enables an easy and dynamic temporary resource deployment within an IP network combined with a high level of security and privacy.

Further advantages are achieved by the embodiments of the invention indicated by the dependent claims.

Preferably, the access server establishes a secure connection through the IP network with the network access server of the internet service provider specified by means of the stored contact data. For example, the access server and the network access server uses an SSL protocol for establishing such secure connection (SSL = Secure Socket Layer).

Further, a secure connection is established between the access server and the application server when the network access server of the internet service provider has connected the application server with the IP network and has allocated an IP address to the application server. Data which has to be exchanged between the application server and the access server are in the following transferred via this secure data connection. A user logs on the application server via a secure data connection established between an IP terminal of the user and the access server through the IP network. Further, the access server relays data that have to be exchanged between the application server and the IP terminal logged on the access server. Consequently, the access server provides a secure connection between the network access server transports the IP terminal and the application server that guarantees security and privacy of the data exchanged between the user and the application server. Further, the network access server transfers the IP address allocated to the application server via a secure connection to the access server which keeps this address secret. Neither the access server nor the network access server transfer this information to the user terminal. Therefore, the IP address allocated to the application server is kept in secure environment which further improves the security of the system. It is not possible for a third party to spy out this IP address by monitoring IP data flows or spy out the IP terminal of the user.

Preferably, the access server stores data about a plurality of released application servers deploying resources within the IP network. Each of these data contain specific user authentication data used by an authorization procedure executed by the access server. When a user logs on an access server, the authorization procedure is started and checks the authorization of the accessing user to access the application server specified by the user. The user authentication data stored in the storage unit of the access server is used to perform this authorization procedure.

According to a preferred embodiment of the invention, the data about the at least one released application server further comprises a grant profile that specifies access rights on the application server in a detailed way. For example, it specifies a set of predefined users, details about their access rights and user authentication data, rights of these users to grant sub-rights to other users, access rights dependent on time and environmental conditions and so on. The access server checks the compliance with said grant profile when executing the aforementioned authorization procedure. Thereby, the access rights to various users may be perfectly shaped to security requirements and user needs.

According to a further embodiment of the invention, the access server provides a kind of network service which makes it possible to users to register their computer as application servers on the fly. A user logs on the access server and subscribes to the service provided by the access server. It registers one or several of his computers as application servers, for example when he intends to go on vacation or a business trip and intends to be still in a position to access data stored on this registered computer or computers. Then, the user transfers contact data and authorization data to the access server. These data are stored in the storage unit of the access server. After this registration process, the user is in a position to access data of the registered computer or computers via any IP terminal connected with the IP network. That makes it possible for a user to temporarily deploy resources within the IP network in a really flexible manner.

According to a preferred embodiment of the invention, a plurality of access servers are provided within the IP network. Preferably, a user or application server randomly selects the access server used for register the application server. Therefore, it is not possible for a third party to know which of these access servers has the ability to contact the application server. To access the application server, a third party has additionally to gain contact data of the access server used to register the application server. This approach results in further improvements in safety and privacy of the data stored by the application server.

The invention makes it possible to connect an application server providing resources in an IP network via a public switched telecommunication network, for example via an ISDN or DSL channel established on demand (ISDN = Integrated Services Digital Network; DSL = Digital Subscriber Line). This enables an easy and flexible temporary provisioning of resources within the IP network.

These as well as other features and advantages of the invention will be better appreciated by reading the following detailed description of presently preferred exemplary embodiments taken in conjunction with accompanying drawings of which:
- Fig. 1: is a bock diagram showing a telecommunication system with a plurality of access servers according to the invention.
- Fig. 2: is a functional view of an access server according to the invention.

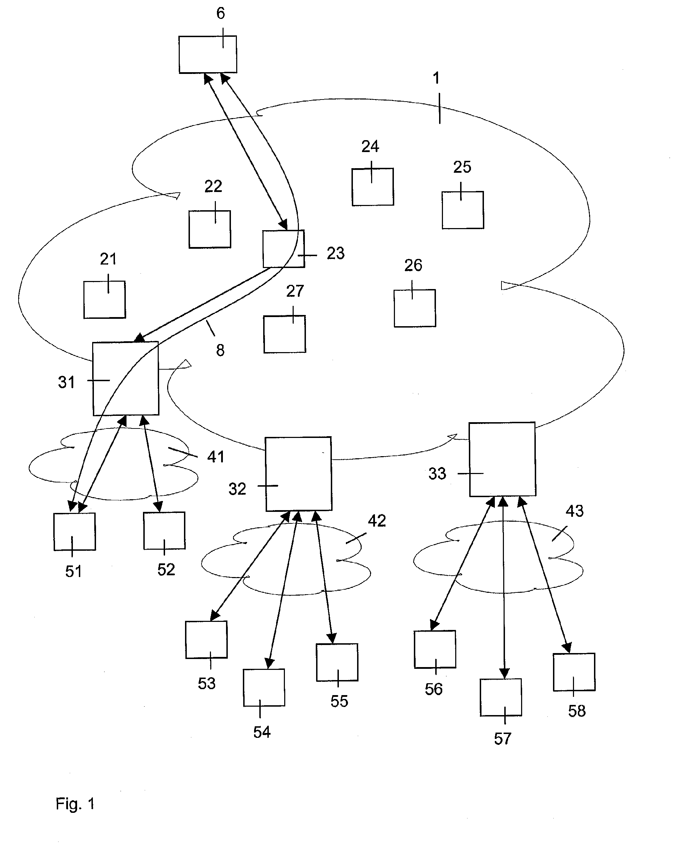

Fig. 1 shows an IP network 1, network access servers 31 to 33, access networks 41 to 43 and application servers 51 to 58.

The IP network 1 is composed of a plurality of physical interlinked communication networks using a common IP protocol as level 3 communication protocol (IP = Internet Protocol). These physical networks are, for example, a ATM, MPLS, Ethernet or SDH networks (ATM = Asynchroune Transfer Mode; MPLS = Multi Protocol Label Switching; SDH = Synchrone Digital Hierarchy).

A plurality of access servers 21 to 27 are connected with the IP network 1. Each of the access servers 21 to 27 are composed of one or several interconnected computers executing a set of software programs and equipped with a communication device enabling communication through the IP network 1. The access servers 21 to 27 store data about the application servers 51 to 58, the stored data comprising contact data of the internet service provider providing the access of the respective application server to the IP network 1 and authentication data necessary to request the internet service provider to grant the respective application server's access to the IP network 1. Further, it provides functionalities to register such information and apply this information to provide resources of the application servers 51 to 58 within the IP network 1.

The application servers 51 to 58 are connected via the access networks 41 to 43 and the network access servers 31 to 33 with the IP network 1. By way of example, the application servers 51 to 52 are connected via the access network 41 and the network access server 31 with the IP network 1, the application servers 53 to 55 are connected via the access network 42 and the network access server 32 with the IP network 1 and the application servers 56 to 58 are connected via the access network 43 and the network access server 33 with the IP network 1.

The access networks 41 to 43 are, for example, one or several telephone networks, for example, PSTN networks or ISDN networks (PSTN = Public Switched Telecommunication Network; ISDN = Integrated Services Digital Network). Further, it is possible that the networks 41 to 43 are fixed or mobile telecommunication networks, for example networks according to the GSM or UMTS standard (GSM = Global System for Mobile Communication; UMTS = Universal Mobile Telecommunication System).

For example, the application servers 51 to 58 are connected via switched connections of the access networks 41 to 43 with the IP network 1. In such case, the application servers 51 to 58 uses an analogue or ISDN modem to exchange data with the IP network 1. Further, it is possible that the application servers 51 to 58 are connected via DSL connections or via a cable network with the IP network 1 (DSL = Digital Subscriber Line).

Various internet service providers provide points of presence (POP) within the access networks 41 to 43. The points of presence enable their subscribers to access the IP network 1. For example, an internet service provider provides one or several points of presence within each region of a telephone network. Their subscribers access the points of presence via the telephone network to exchange data with the IP network 1. A point of presence consists of one or more network access servers, for example of the network access servers 31. The network access servers 31 checks the authorization of a user contacting the point of presence. It checks the authorization of this user to access the IP network 1 via the service provided by the internet service provider operating this point of presence. Authorization data are exchanged between the application server that requests access to the IP network 1 and the respective network access server of the contacted point of presence. If the check is positive, the network access server 31 allocates an IP address to this application server and relays the data flow between the IP network 1 and the application server.

Further, the network access server 31 provides an interface to be contacted via the IP network 1 to perform such kind of authorization process and connects a selected one of the application servers 51 to 58 with the IP network 1, if the authorization is positive.

The application servers 51 to 58 are computers equipped with a communication card to communicate via the access networks 41 to 43.

To make the resources of his computer available within the IP network 1, a user selects one of the access servers 21 to 26, logs on the selected access server via the IP network 1 and registers the computer within the selected access server as application server. For example, a user triggers the establishment of a secure connection between the application server 51 and the access server 23 via the access network 41 and the IP network 1. Then, data about the application server 51 comprising contact data of the internet service provider providing the access of the application server 51 to the IP network 1 and authentication data necessary to request this internet service provider to grant the application server 51 access to the IP network 1 are transferred within the registration process from the application server 51 to the access server 23.

Further, it is possible that the user logs on the selected access server by any IP terminal connected to the IP network 1 to register the application server 51. It is not necessary to execute the registration process by means of the application server that has to be registered.

Preferably, the application server 51 randomly selects one of the access servers 21 to 27 from a list of available access servers and in the following contacts this randomly selected access server for starting the registration process. Further, it is possible to provide within the IP network 1 a broker which performs a randomly selection process and replies to the accessing terminal the contact address of the randomly selected access server. Such random selection of the access server out of a group of available access servers additionally improves the security of the system.

If the user intends to remotely access resources of the application server 51 via the IP network 1, it contacts the access server 23. For example, the user contacts the access server 23 via an IP terminal 6, logs on the application server 23 and requests access to the application server 51. The access server 23 executes an authorization procedure checking the right of the user to access the application server 51. Then, it establishes a connection through the IP network 1 to a network access server of the internet service provider specified by means of the contact data registered for the access server 51. For example, the access server 23 establishes a connection with the network access server 31. Then, the access server 23 requests the network access server 31 by means of the authentication data registered for the application server 51 to connect the application server 51 with the IP network 1, allocate an IP address to the application server 51 and relay data between the application server and the access server 23. If the result of the authorization procedure is positive, the network access server 31 triggers the establishment of a communication connection between the application server 51 and the network access server 31 through the access network 41. Then, it allocates an IP address to the application server 51 and transfers the allocated IP address to the access server 23. In the following, data are exchanged between the access server 23 and the application server 51 in a bi-directional way, wherein the exchanged data are relayed by the network access server 31. Further, the access server 23 relayes data that has to be exchanged between the IP terminal 6 and the applications server 51 and thereby provides an end-to-end communication connection 8 between the IP terminal 6 and the application server 51.

If the IP terminal 6 releases the end-to-end connection 8 or requests the access server 23 to release the end-to-end connection 8, the access server 23 requests the network access server 31 to release its connection with the application server 51, whereupon the network access server 31 interrupts the connection of the connection between the application server 51 and the IP network 1.

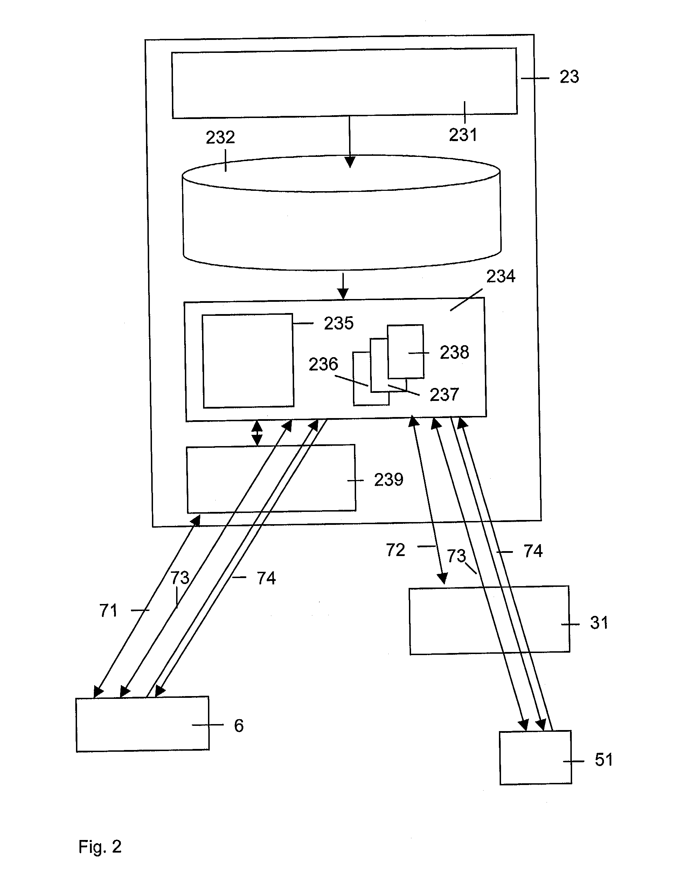

In the following, a detailed implementation of a further embodiment of the access server 23 is exemplified by hand of Fig. 2.

Fig. 2 shows the access server 23, the IP terminal 6, the network access server 31 and the application server 51.

The access server 23 is formed by a hardware platform and several software applications executed based on this hardware platform. The functionalities of the access server 23 are performed by the execution of these application programs by the hardware platform of the access server 23. From functional point of view, the access server 23 comprises a storage unit 232, two control units 231 and 234 and a communication unit 239.

The storage unit 232 stores data about a plurality of application servers registered in the access server 23. For each of these access servers, the storage unit 232 stores user authentication data, grant profile data and internet service provider contact and authentication data.

The user authentication data include, for example, a user name and a password selected by the user or administrator for the access to the respective application server. Further, it is possible to store an encryption key used to decrypt a random number encrypted by an accessing terminal to check the authentication of this terminal.

The contact data of the internet service provider specifies one or several network access servers of an internet service provider providing the access of the respective application server to the IP network 1. Each of the internet service provider supporting this kind of service provides at least one network access server that supports the method according to the invention. For example, the storage unit 232 stores an IP address of an access interface of this access network server provided for the interaction with the access servers 21 to 27.

The authentication data includes data necessary to request the internet service provider to grant the application server's access to the IP network 1. These data include information about the identity or address of the application server, the subscription of the user of the application server and authentication data, for example a password or an encryption key assigned to the subscription.

The grant profile specifies the user or user groups entitled to access the respective application server. It is possible that different user authentication data are assigned to different users and/or user groups. Further, the grant profile optionally specify details of the access rights granted to the different users or user profiles. Further, it optionally comprises time and/or environmental conditions linked to the different users, user groups or access rights. For example, the access right of a specific user or user group is limited to a specific time period, to a specific location of the user or to a specific IP terminal or IP address used to contact the access server 23. Access rights may limit the access of a user or user group to a specific resources and/or data of the respective application server or to the kind of access to this resources and/or data, for example limit the access to read specific parts of the file system of the application server 51.

The control unit 231 administrates the data stored in the storage unit 232. It provides functionalities to enroll an application server and create a dedicated registration within the storage unit 232, and to delete and amend such registrations in the storage unit 232. Further, the control unit 231 provides an access interface to these functionalities enabling users to create, delete and amend registrations within the storage unit 232. Preferably, this access interface is based on WEB technology enabling a user to access the registration service by means of a WEB browser.

The control unit 234 is formed by a controller 235 and one or more relay processes 236 to 238. Further, the control unit 234 interacts with the communication unit 239 providing an access interface to IP terminals requesting to access resources of an application server registered in the storage unit 232 of the access server 23. For example, the communication unit 239 provides an WEB based interface accessible by a WEB browser.

The IP terminal 6 contacts the access server 23 via the access interface of the communication unit 239 to request access to a specific application server. Further, the IP terminal 6 transmits identification and/or user data and authentication data to the access server 23. The controller 235 checks whether the application server specified within the request is registered within the storage unit 232. Further, it executes an authentication procedure checking the authenticity of the accessing user and/or IP terminal. This authentication procedure is done by help of the user authentication data stored for the respective application server specified within the request. Further, the controller 235 checks whether the conditions of the grant profile are fulfilled for the authentified user. If the identified access server is not registered within the storage unit 232, if the result of the authentication process is not positive or if the conditions of the grant profile are not fulfilled, the controller 235 denies the further execution of the request.

Otherwise, the controller 235 establishes a secure connection with the network access server specified by the contact data of the registration. Then, it requests this network access server, for example the network access server 31, to connect the application server with the IP network 1. In the following, an authentication procedure is executed between the controller 235 and the network access server 31 wherein the controller 235 uses the authentication data stored in the storage unit 232 for the specified access server to authorize the request. When receiving the IP address allocated by the network access server 31 to the application server, for example to the application server 51, the controller establishes a secure communication connection with the application server 51 through the IP network 1 and creates a relay process, for example the relay process 236, to relay data between the IP terminal 6 and the application server 51. Preferably, the controller 236 establishes a secure connection 71 between the IP terminal 6 and the access server 23 through the IP network 1 which is in the following used to exchange the data relayed by the relay process 236.

Further, the relay process 236 monitors the data exchanged between the IP terminal 6 and the application server 51 and checks the compliance with the grant profile. If it detects an access to resources of the access server which contradicts the access rights specified in the grant profile, it denies the relay of this request. Further, it is possible that the resources of the application server 51 are in addition protected by a local protection mechanism and the user has to perform an additional authentication process to finally access resources of the application server 51. For example, data assigned to a communication 73 exchanged between the IP terminal 6 and the application server 51 via the relay process 236 which ensures such a final end-to-end authentication between the user of the IP terminal 6 and the application server 51. In the following, the IP terminal 6 is in a position to access the resources of the application server 51 based on an exchange of data 71 relayed by the relay process 236.

## Claims

1. A method of providing within an IP network (1) resources (51 to 58) with restricted access, the method comprising the steps of:
logging on an access server (21 to 27) via the IP network (1), the access server (21 to 27) storing data about at least one released application server (51 to 58), wherein the data about the at least one released application server comprises contact data of the internet service provider providing the application server's access to the IP network (1) and authentication data necessary to request the internet service provider to grant the application server (51 to 58) access to the IP network (1);
establishing a connection (72) through the IP network (1) between the access server (23) and a network access server (31) of the internet service provider specified by means of said contact data;
requesting, by the access server (23), that network access server (31) by means of said authentication data to connect the application server (51) with the IP network (1), allocate an IP address to the application server (51) and relay data between the application server (51) and the access server (23); and
relaying, by the access server (23), data that have to be exchanged between the application server (51) and an IP terminal (6) logged on the access server (23) and thereby providing an end-to-end communication connection (8) between the IP terminal (6) and the application server (51).

2. The method of claim 1,
**characterized in**
**that** the method comprises the further step of establishing a secure connection between the access server (23) and the application server (51) and transferring data exchanged with the application server (51) via said secure connection.

3. The method of claim 1,
**characterized in**
**that** a user logs on the application server (51) via a secure data connection established between an IP terminal (6) of the user and the access server (23) through the IP network (1).

4. The method of claim 1,
**characterized in**
**that** the method comprises the further step of executing, by the access server (23), an authorization procedure checking the authorization of an accessing user to access an application server (51 to 58) specified by the user.

5. The method of claim 4,
**characterized in**
**that** the data about the at least one released application server comprises a grant profile specifying access rights on the application server and the access server checks the compliance with said grant profile when executing the authorization procedure.

6. The method of claim 1,
**characterized in**
**that** the network access server (31 to 33) connects the application server (51 to 58) via an ISDN or DSL connection with the IP network (1).

7. The method of claim 1,
**characterized in**
**that** a user logs on the access server (21 to 27) via the IP network (1) to register his computer as application server (51 to 58).

8. The method of claim 1 or claim 7,
**characterized in**
**that** the method comprises the further steps of providing a plurality of access servers (51 to 58) within the IP network (1) and randomly selecting the access server used to register said application server (51 to 58).

9. An access server (21 to 27) for providing within an IP network (1) resources (51 to 58) with restricted access, the access server (21 to 27) comprising a storage unit (232) for storing data about at least one released application server (51), wherein the data about the at least one released application server comprise contact data of the internet service provider providing the application server's access to the IP network (1) and authentication data necessary to request the internet service provider to grant the application server (51) access to the IP network (1); and a control unit for establishing a connection (72) through the IP network (1) between the access server (23) and a network access server (31) of the internet service provider specified by means of said contact data, for requesting said network access server (31) by means of said authentication data to connect the application server (51) with the IP network (1), allocate an IP address to the application server (51) and relay data between the application server (51) and the access server (23), and for relaying data that have to be exchanged between the application server (51) and an IP terminal (6) logged on the access server (23) and thereby providing an end-to-end communication connection (8) between the IP terminal (6) and the application server (51).

## Patentansprüche

1. Verfahren zum Bereitstellen, in einem IP-Netz (1), von Ressourcen (51 bis 58) mit eingeschränktem Zugang, umfassend folgende Schritte:
Einloggen in einen Zugangsserver (21 bis 27) über das IP-Netz (1), wobei der Zugangsserver (21 bis 27) Daten über mindestens einen freigegebenen Applikationsserver (51 bis 58) speichert, wobei die Daten über den mindestens einen freigegebenen Applikationsserver Kontaktdaten des Internet-Serviceproviders umfassen, der den Zugang des Applikationsservers zum IP-Netz (1) gewährt, sowie Authentifizierungsdaten, die erforderlich sind, um bei dem Internet Service Provider die Gewährung des Zugangs des Applikationsserver (51 bis 58) zum IP-Netz (1) anzufordern;
Aufbau einer Verbindung (72) über das IP-Netz (1) zwischen dem Zugangsserver (23) und einem Netzzugangsserver (31) des Internet Service Providers unter Angabe der erwähnten Kontaktdaten;
Anfordern, über den Zugangsserver (23), dass der Netzzugangsserver (31) unter Angabe der erwähnten Kontaktdaten den Applikationsserver (51) mit dem IP-Netz (1) verbindet, Erteilen einer IP-Adresse an den Applikationsserver (51) und Übertragen von Daten zwischen dem Applikationsserver (51) und dem Zugangsserver (23); und
Übertragen, durch den Zugangsserver (23), von Daten, die zwischen dem Applikationsserver (51) und einem in den Zugangsserver (23) eingeloggten IP-Terminal (6) auszutauschen sind, und damit Bereitstellen einer durchgehenden Kommunikationsverbindung (8) zwischen dem IP-Terminal (6) und dem Applikationsserver (51).

2. Das Verfahren nach Anspruch 1,
**dadurch gekennzeichnet,**
**dass** das Verfahren den weiteren Schritt des Aufbaus einer sicheren Verbindung zwischen dem Zugangsserver (23) und dem Applikationsserver (51) umfasst, sowie der Übertragung von mit dem dem Applikationsserver (51) ausgetauschten Daten über die erwähnte sichere Verbindung.

3. Das Verfahren nach Anspruch 1,
**dadurch gekennzeichnet,**
**dass** sich ein Nutzer in den Applikationsserver (51) über eine zwischen einem IP-Terminal (6) des Nutzers und dem Zugangsserver (23) über das IP-Netz (1) aufgebaute sichere Datenverbindung einloggt.

4. Das Verfahren nach Anspuch 1,
**dadurch gekennzeichnet,**
**dass** das Verfahren den weiteren Schritt der Ausführung, durch den Zugangsserver (23), eines Zulassungsverfahrens zur Prüfung der Zulassung eines zugreifenden Nutzers zum Zugang auf einen vom Nutzer spezifizierten Applikationsserver (51 bis 58) umfasst.

5. Das Verfahren nach Anspuch 4,
**dadurch gekennzeichnet,**
**dass** die Daten über mindestens einen freigegebenen Applikationsserver ein Zugangsprofil umfassen, das die Zugangsrechte zu dem Applikationsserver definiert, wobei der Zugangsserver die Übereinstimmung mit dem erwähnten Zugangsprofil während der Ausführung des Zulassungsverfahrens prüft.

6. Das Verfahren nach Anspuch 1,
**dadurch gekennzeichnet,**
**dass** der Netzzugangsserver (31 bis 33) den Applikationsserver (51 bis 58) über eine ISDN- oder DSL-Verbindung mit dem IP-Netz (1) verbindet.

7. Das Verfahren nach Anspuch 1,
**dadurch gekennzeichnet,**
**dass** der Nutzer den Zugangsserver (21 bis 27) ïber das IP-Netz (1) einloggt, um seinen Computer als Applikationsserver (51 bis 58) zu registrieren.

8. Das Verfahren nach Anspuch 1 oder 7,
**dadurch gekennzeichnet,**
**dass** dass das Verfahren die weiteren Schritte der Bereitstellung einer Mehrzahl von Zugangsservern (51 bis 58) innerhalb des IP-Netzes (1) und das zufällige Auswählen der zur Registrierung des erwähnten Applikationsservers (51 bis 58) verwendeten Zugangsservers umfasst.

9. Ein Zugangsserver (21 bis 27) zur Bereitstellung, in einem IP-Netz (1), von Ressourcen (51 bis 58) mit eingeschränktem Zugang, wobei der Zugangsserver (21 bis 27) eine Speichereinheit (232) zum Speichern von Daten über mindestens einen freigegebenen Applikationsserver (51) umfasst, wobei die Daten über den mindestens einen freigegebenen Applikationsserver Kontaktdaten des Internet-Serviceproviders umfassen, der den Zugang des Applikationsservers zum IP-Netz (1) gewährt, sowie Authentifizierungsdaten, die erforderlich sind, um bei dem Internet Service Provider die Gewährung des Zugangs des Applikationsserver (51) zum IP-Netz (1) anzufordern; und einer Kontrolleinheit zum Aufbau einer Verbindung (72) über das IP-Netz (1) zwischen dem Zugangsserver (23) und einem Netzzugangsserver (31) des Internet-Serviceproviders unter Angabe der erwähnten Kontaktdaten, um bei dem erwähnten Netzzugangsserver (31) unter Angabe der erwähnten Authentifizierungsdaten die Verbindung des Applikationsservers (51) mit dem IP-Netz (1), die Erteilung einer IP-Addresse an den Applikationsserver (51) und die Übertragung von Daten zwischen dem Applikationsserver (51) und dem Zugangsserver (23) anzufordern, und um Daten zu übertragen, die zwischen dem Applikationsserver (51) und einem in den Zugangsserver (23) eingeloggten IP-Terminal (6) auszutauschen sind, und damit eine durchgängige Kommunikationsverbindung (8) zwischen dem IP-Terminal (6) und dem Applikationsserver (51) bereitzustellen.

## Revendications

1. Procédé permettant, au sein d'un réseau IP (1), de fournir des ressources (51 à 58) à accès restreint, le procédé comprenant les étapes suivantes :
se connecter à un serveur d'accès (21 à 27) par l'intermédiaire du réseau IP (1), le serveur d'accès (21 à 27) stockant des données sur au moins un serveur d'applications (51 à 58) libéré, dans lequel les données sur l'au moins un serveur d'applications libéré comprennent des données de contact du fournisseur de services Internet donnant au serveur d'applications l'accès au réseau IP (1) et des données d'authentification nécessaires pour demander au fournisseur de services Internet d'autoriser au serveur d'applications (51 à 58) l'accès au réseau IP (1) ;
établir une connexion (72) à travers le réseau IP (1) entre le serveur d'accès (23) et un serveur d'accès au réseau (31) du fournisseur de services Internet spécifié au moyen desdites données de contact ;
demander, par le serveur d'accès (23), que le serveur d'accès au réseau (31), au moyen desdites données d'authentification, connecte le serveur d'applications (51) au réseau IP (1), attribue une adresse IP au serveur d'applications (51) et relaie des données entre le serveur d'applications (51) et le serveur d'accès (23) ; et
relayer, au moyen du serveur d'accès (23), des données qui doivent être échangées entre le serveur d'applications (51) et un terminal IP (6) connecté au serveur d'accès (23) et fournissant ainsi une connexion de communication de bout en bout (8) entre le terminal IP (6) et le serveur d'applications (51).

2. Procédé selon la revendication 1,
**caractérisé en ce que**
le procédé comprend l'étape supplémentaire d'établissement d'une connexion sécurisée entre le serveur d'accès (23) et le serveur d'applications (51) et de transfert de données échangées avec le serveur d'applications (51) par l'intermédiaire de ladite connexion sécurisée.

3. Procédé selon la revendication 1,
**caractérisé en ce que**
un utilisateur se connecte au serveur d'applications (51) par l'intermédiaire d'une connexion de données sécurisée établie entre un terminal IP (6) de l'utilisateur et le serveur d'accès (23) à travers le réseau IP (1).

4. Procédé selon la revendication 1,
**caractérisé en ce que**
le procédé comprend l'étape supplémentaire d'exécution, par le serveur d'accès (23), d'une procédure d'autorisation vérifiant l'autorisation d'un utilisateur accédant à accéder à un serveur d'applications (51 à 58) spécifié par l'utilisateur.

5. Procédé selon la revendication 4,
**caractérisé en ce que**
les données sur l'au moins un serveur d'applications libéré comprennent un profil d'autorisation spécifiant des droits d'accès sur le serveur d'applications et le serveur d'accès vérifie la conformité avec ledit profil d'autorisation lorsqu'il exécute la procédure d'autorisation.

6. Procédé selon la revendication 1,
**caractérisé en ce que**
le serveur d'accès au réseau (31 à 33) connecte le serveur d'applications (51 à 58), par l'intermédiaire d'une connexion RNIS ou DSL, au réseau IP (1).

7. Procédé selon la revendication 1,
**caractérisé en ce que**
un utilisateur se connecte au serveur d'accès (21 à 27) par l'intermédiaire du réseau IP (1) pour enregistrer son ordinateur en tant que serveur d'applications (51 à 58).

8. Procédé selon la revendication 1 ou la revendication 7,
**caractérisé en ce que**
le procédé comprend les étapes supplémentaires de fourniture d'une pluralité de serveurs d'accès (51 à 58) au sein du réseau IP (1) et de sélection aléatoire du serveur d'accès utilisé pour enregistrer ledit serveur d'applications (51 à 58).

9. Serveur d'accès (21 à 27) permettant, au sein d'un réseau IP (1), de fournir des ressources (51 à 58) à accès restreint, le serveur d'accès (21 à 27) comprenant une unité de stockage (232) pour stocker des données sur au moins un serveur d'applications (51) libéré, dans lequel les données sur l'au moins un serveur d'applications libéré comprennent des données de contact du fournisseur de services Internet donnant au serveur d'applications l'accès au réseau IP (1) et des données d'authentification nécessaires pour demander au fournisseur de services Internet d'autoriser au serveur d'applications (51) l'accès au réseau IP (1) ; et une unité de commande pour établir une connexion (72) à travers le réseau IP (1) entre le serveur d'accès (23) et un serveur d'accès au réseau (31) du fournisseur de services Internet spécifié au moyen desdites données de contact, pour demander audit serveur d'accès au réseau (31), au moyen desdites données d'authentification, de connecter le serveur d'applications (51) au réseau IP (1), d'attribuer une adresse IP au serveur d'applications (51) et de relayer des données entre le serveur d'applications (51) et le serveur d'accès (23), et pour relayer des données qui doivent être échangées entre le serveur d'applications (51) et un terminal IP (6) connecté au serveur d'accès (23) et fournissant ainsi une connexion de communication de bout en bout (8) entre le terminal IP (6) et le serveur d'applications (51).
